# EUROPEAN PATENT APPLICATION

(11) **EP 2 687 577 A1**
(43) Date of publication of application: **22.01.2014**
(21) Application number: 12177339.4
(22) Date of filing: 20.07.2012
(51) Int. Cl.: C10G 2/00, C10G 21/14, B01D 53/14, C01B 3/52, C10K 1/18

(54) **Hydrocarbon recovery from Fischer-Tropsch off-gas**

(71) Applicant: Shell Internationale Research Maatschappij B.V., 2596 HR The Hague (NL)
(72) Inventor: Boerrigter, Harold, 1031HW Amsterdam (NL); Kustosz, Andreas, 1031HW Amsterdam (NL); Leonardi, Andres Eduardo, 1031HW Amsterdam (NL); Ramone, Lionel Paul, 1031HW Amsterdam (NL)
(74) Representative: Matthezing, Robert Maarten

(57) **Abstract**

The invention pertains to a method for processing a Fischer-Tropsch off-gas wherein Fischer-Tropsch off-gas is contacted with a wash fluid in a scrubber, and wherein wash fluid with C₃+ hydrocarbons is subjected to hydrocracking and/or hydrocracking/hydroisomerisation in a cracking unit. The wash fluid preferably is kerosene which is recycled from the scrubber via a separation unit, a cracking unit and a separation unit, back to the scrubber.

## Description

### Field of the Invention

The present invention relates to a method for processing a Fischer-Tropsch off-gas. In the method hydrocarbons are removed from Fischer-Tropsch off-gas. The present invention particularly aims at the recovery of C₃+ hydrocarbons from Fischer-Tropsch off-gas.

### Background of the Invention

The Fischer-Tropsch process can be used for the conversion of synthesis gas (from hydrocarbonaceous feed stocks) into liquid and/or solid hydrocarbons. Generally, the feed stock (e.g. natural gas, associated gas and/or coal-bed methane, heavy and/or residual oil fractions, coal, biomass) is converted in a first step into a mixture of hydrogen and carbon monoxide; this mixture is often referred to as synthesis gas or syngas. The synthesis gas is then fed into a reactor where it is converted in one or more steps over a suitable catalyst at elevated temperature and pressure into paraffinic compounds and water. The obtained paraffinic compounds range from methane to high molecular weight hydrocarbons. The obtained high molecular weight hydrocarbons can comprise up to 200 carbon atoms, or, under particular circumstances, even more carbon atoms.

Numerous types of reactor systems have been developed for carrying out the Fischer-Tropsch reaction. For example, Fischer-Tropsch reactor systems include fixed bed reactors, especially multi-tubular fixed bed reactors, fluidized bed reactors, such as entrained fluidized bed reactors and fixed fluidized bed reactors, and slurry bed reactors such as three-phase slurry bubble columns and ebulated bed reactors.

During a Fischer-Tropsch process paraffinic compounds of different weights are formed. Additionally water is formed. When an effluent is withdrawn from a Fischer-Tropsch system in most processes some unconverted syngas leaves the system as well. Further, gaseous components such as carbon dioxide, nitrogen and argon may leave the system when an effluent is withdrawn from a Fischer-Tropsch system. Gaseous components such as carbon dioxide, nitrogen and argon may, for example, be present in the syngas used for the Fischer-Tropsch reaction.

Effluent may be withdrawn through a single outlet or through several outlets in a Fischer-Tropsch reactor. Effluent may be withdrawn at different heights of a Fischer-Tropsch reactor. Effluent may be separated and/or fractionated after withdrawal from a Fischer-Tropsch reactor.

An example of a product stream that may be obtained is a stream comprising waxy hydrocarbons and possibly heavy oxygenates. Such streams may be subjected to an upgrading step. The upgrading step may result in a decrease in viscosity, a decrease in pour point or cloud point, and/or a decrease in (end) boiling point. A stream comprising waxy hydrocarbons may be subjected to a hydrogenation step, a hydrocracking step, or a hydrocracking/hydroisomerisation step, or a combination thereof.

Another example of a product stream that may be obtained is a stream comprising light hydrocarbons and possibly light oxygenates. A stream comprising light hydrocarbons may be used as such, or may be subjected to a treatment with hydrogen.

A further example of a product stream that may be obtained is a stream comprising water.

Another example of a product stream that may be obtained is a stream comprising unconverted syngas. This stream is also referred to as off-gas or tail gas. Off-gas often comprises unconverted hydrogen, unconverted carbon monoxide, carbon dioxide, nitrogen, methane, and hydrocarbons comprising 2 to 9 carbon atoms. Off-gas often also comprises oxygenates comprising 2 to 9 carbon atoms.

A part of the off-gas obtained from a reactor may be recycled to the same reactor. A part of the off-gas obtained from one reactor may be fed to another reactor. The off-gas obtained from such a second reactor may be recycled to the first and/or to the second reactor, and/or it may be fed to a third reactor.

Gaseous components that do not take part in the Fischer-Tropsch reaction are considered to be inert toward this reaction; they are also referred to as inerts. Examples of such inerts are nitrogen and carbon dioxide.

Due to the presence of inerts in off-gas, off-gas preferably is not completely recycled since inerts would accumulate and adversely affect the production of hydrocarbons in the Fischer-Tropsch reactor(s). Therefore a portion of the Fischer-Tropsch off-gas is often removed from the Fischer-Tropsch process.

Often some off-gas is removed from a Fischer-Tropsch process, regardless the number of recycles and regardless the number of Fischer-Tropsch reactors in the Fischer-Tropsch process. All or a part of the removed off-gas may be used as fuel, for example as fuel for furnaces. It is desired that at least a part of the valuable C₃+ hydrocarbons is removed from the Fischer-Tropsch off-gas before the off-gas is used as fuel or before it is disposed of.

An object of the present invention is to recover hydrocarbons from Fischer-Tropsch off-gas. The present invention particularly aims at the recovery, or removal, of C₃+ hydrocarbons, and optionally also C₃+ oxygenates, from Fischer-Tropsch off-gas.

The present invention particularly aims at the removal of C3+ hydrocarbons from Fischer-Tropsch off-gas comprising hydrogen, carbon monoxide, carbon dioxide, nitrogen, and C3+ hydrocarbons. The off-gas may additionally comprise other components such as methane, hydrocarbons comprising 2 carbon atoms, and/or argon. The gas may comprise oxygenates. In case the off-gas comprises C3+ oxygenates, C3+ oxygenates may also be removed with the process of the present invention.

### Summary of the Invention

The present invention provides a method for processing a Fischer-Tropsch off-gas comprising the following steps:
a) catalytic conversion of synthesis gas using a Fischer-Tropsch catalyst into a Fischer-Tropsch product;
b) separating the Fischer-Tropsch product of step a) into at least one hydrocarbon product stream and a Fischer-Tropsch off-gas, said Fischer-Tropsch off-gas comprising hydrogen, carbon monoxide, carbon dioxide, nitrogen, and C3+ hydrocarbons;
c) contacting at least a part of the Fischer-Tropsch off-gas obtained in step b), optionally after cooling, with a wash fluid in a scrubber;
d) removing wash fluid and at least a portion of the C₃+ hydrocarbons in a stream from the scrubber of step c);
e) removing the remaining off-gas in a separate stream from the scrubber of step c);
f) providing a feed comprising at least a part of the hydrocarbon product stream obtained in step b) and a feed comprising at least a part of the stream obtained in step d) to a separator,
   or providing a feed comprising at least a part of the hydrocarbon product stream obtained in step b) and at least a part of the stream obtained in step d) to a separator;
g) separating at least a part of the hydrocarbon product stream obtained in step b) and at least a part of the stream obtained in step d) in the separator of step f) into at least one light stream and one heavy stream, said light stream preferably comprising carbon monoxide and carbon dioxide and said heavy stream preferably comprising hydrocarbons with at least 3 carbon atoms;
h) subjecting at least a part of the heavy stream obtained in step g) to hydrocracking and/or hydrocracking/hydroisomerisation;
i) separating at least a part of the hydrocracked and/or hydrocracked/hydroisomerised product obtained in step h) into at least two streams;
j) using at least a part of one of the streams obtained in step i) as wash fluid in step c). Drawing

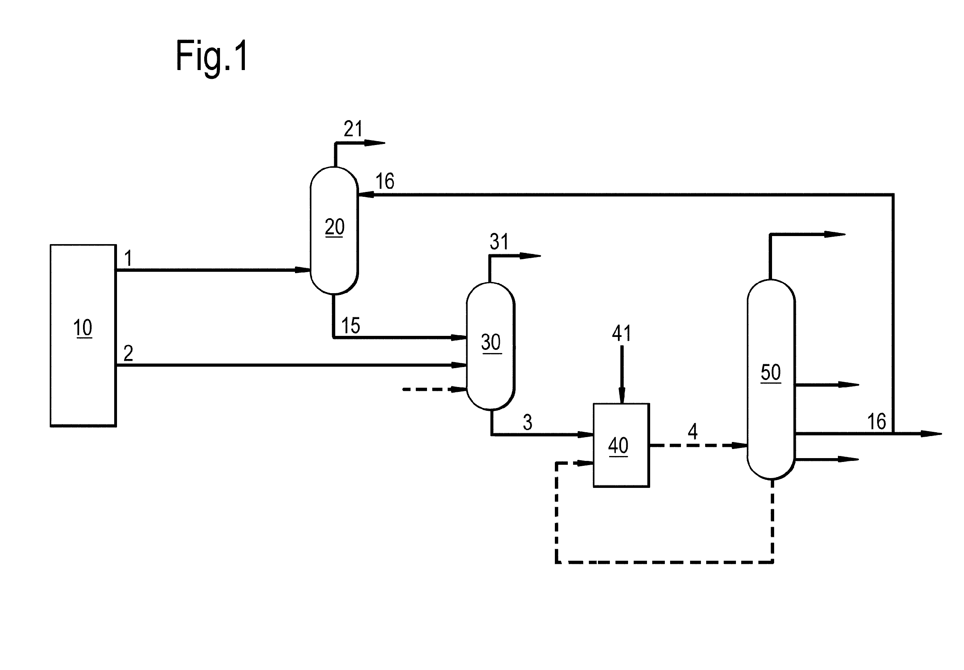

Figure 1 shows an overview of the process steps of a method according to the invention.

### Detailed Description of the Invention

The present invention provides a method for processing a Fischer-Tropsch off-gas comprising the following steps:
a) catalytic conversion of synthesis gas using a Fischer-Tropsch catalyst into a Fischer-Tropsch product;
b) separating the Fischer-Tropsch product of step a) into at least one hydrocarbon product stream and a Fischer-Tropsch off-gas, said Fischer-Tropsch off-gas comprising hydrogen, carbon monoxide, carbon dioxide, nitrogen, and C3+ hydrocarbons;
c) contacting at least a part of the Fischer-Tropsch off-gas obtained in step b), optionally after cooling, with a wash fluid in a scrubber;
d) removing wash fluid and at least a portion of the C₃+ hydrocarbons in a stream from the scrubber of step c);
e) removing the remaining off-gas in a separate stream from the scrubber of step c);
f) providing a feed comprising at least a part of the hydrocarbon product stream obtained in step b) and a feed comprising at least a part of the stream obtained in step d) to a separator, or providing a feed comprising at least a part of the hydrocarbon product stream obtained in step b) and at least a part of the stream obtained in step d) to a separator;
g) separating at least a part of the hydrocarbon product stream obtained in step b) and at least a part of the stream obtained in step d) in the separator of step f) into at least one light stream and one heavy stream, said light stream preferably comprising carbon monoxide and carbon dioxide and said heavy stream preferably comprising hydrocarbons with at least 3 carbon atoms;
h) subjecting at least a part of the heavy stream obtained in step g) to hydrocracking and/or hydrocracking/hydroisomerisation;
i) separating at least a part of the hydrocracked and/or hydrocracked/hydroisomerised product obtained in step h) into at least two streams;
j) using at least a part of one of the streams obtained in step i) as wash fluid in step c).

Preferably all steps of the process of the invention are performed in the order of numbering. The process may comprise additional steps.

Separating step b) and separating step g) are performed in different separating units.

In step a) synthesis gas is subjected to catalytic conversion using a Fischer-Tropsch catalyst. The syngas is converted into a Fischer-Tropsch product. Catalytic conversion is preferably performed by providing syngas to a Fischer-Tropsch reactor and providing the following process conditions in the reactor: a temperature in the range from 125 to 350 °C, a pressure in the range from 5 to 150 bar absolute, and a gaseous hourly space velocity in the range from 500 to 10000 Nl/1/h.

Preferably the Fischer-Tropsch catalyst comprises a Group VIII metal component, more preferably cobalt, iron and/or ruthenium, most preferably cobalt. References to the Periodic Table and groups thereof used herein refer to the previous IUPAC version of the Periodic Table of Elements such as that described in the 68th Edition of the Handbook of Chemistry and Physics (CPC Press).

Typically, the catalysts comprise a catalyst carrier. The catalyst carrier is preferably porous, such as a porous inorganic refractory oxide, more preferably alumina, silica, titania, zirconia or combinations thereof, most preferably titania.

The optimum amount of catalytically active metal present on the carrier depends inter alia on the specific catalytically active metal. Typically, the amount of cobalt present in the Fischer-Tropsch catalyst may range from 1 to 100 parts by weight per 100 parts by weight of carrier material, preferably from 10 to 50 parts by weight per 100 parts by weight of carrier material. In case the catalyst comprises cobalt and titania, the amount of cobalt preferably is in the range of between 10 weight percent (wt%) and 35 wt% cobalt, more preferably between 15 wt% and 30 wt% cobalt, calculated on the total weight of titania and cobalt.

In step b) at least a part of the Fischer-Tropsch product of step a) is separated into at least one hydrocarbon product stream and a Fischer-Tropsch off-gas. This may be performed by withdrawing effluent through a single outlet in a Fischer-Tropsch reactor, followed by separation in a separation unit into at least one hydrocarbon product stream and a Fischer-Tropsch off-gas. Alternatively, this may be performed by withdrawing effluent through several outlets in a Fischer-Tropsch reactor. Effluent may be withdrawn at different heights of a Fischer-Tropsch reactor. In case effluent is withdrawn through several outlets, one stream may be considered Fischer-Tropsch off-gas. Alternatively, in case effluent is withdrawn through several outlets the stream(s) coming from one or more outlets may be separated and/or fractionated after withdrawal from the Fischer-Tropsch reactor into at least one hydrocarbon product stream and a Fischer-Tropsch off-gas.

The Fischer-Tropsch product of step a) from which hydrocarbon product stream(s) and off-gas are separated in step b) may be Fischer-Tropsch product from one Fischer-Tropsch reactor, but it may also be combined product from several Fischer-Tropsch reactors.

Preferably the Fischer-Tropsch off-gas is cooled in one or more stages before step c). During the cooling step(s) hydrocarbon product, especially C₅+ hydrocarbons, and/or water may be separated from the off-gas. Before cooling, the temperature of the off-gas may be 180-280 °C, preferably 210-260 °C. After cooling the off-gas preferably is at a temperature of 50 °C or lower.

In one embodiment, the off-gas is first cooled by 50-200 °C, preferably 80-100 °C. In this first cooling step the off-gas preferably is cooled to 100-160 °C, more preferably to 120-140 °C. Then the off-gas is cooled even further in a second cooling step in which the off-gas is cooled by 20-130 °C, preferably 50-90 °C. In this embodiment the off-gas is optionally subjected to a third cooling step.

The present invention particularly aims at the removal of C3+ hydrocarbons from Fischer-Tropsch off-gas comprising hydrogen, carbon monoxide, carbon dioxide, nitrogen, and C3+ hydrocarbons. The off-gas may additionally comprise other components such as methane, hydrocarbons comprising 2 carbon atoms, water, and/or argon. The off-gas may comprise oxygenates, also referred to as oxygenated compounds, such as methanol and dimethyl ether. In case the off-gas comprises C3+ oxygenates, C3+ oxygenates may also be removed with the process of the present invention.

In step c) the Fischer-Tropsch off-gas is contacted with a wash fluid in a scrubber.

The off-gas that is contacted with the wash fluid in step c) preferably is in a gaseous state at a pressure between 1 and 80 bar, preferably between 20 and 70 bar, and a temperature above 0 °C and below 50 °C, preferably a temperature above 10 °C and below 40 °C. Preferably at least 90 volume %, more preferably at least 95 volume %, even more preferably at least 99 volume % of the hydrocarbons in the off-gas that is contacted with the wash fluid in step c) consists of hydrocarbons comprising 3 to 9 carbon atoms, hydrocarbons comprising 2 carbon atoms, and methane. Preferably at least 0.005 volume %, more preferably at least 0.01 volume %, even more preferably at least 0.1 volume %, still more preferably at least 1 volume % of the hydrocarbons in the off-gas that is contacted with the wash fluid in step c) consists of hydrocarbons comprising 3 to 9 carbon atoms.

The wash fluid used in step c) comprises hydrocarbons. Preferably at least 60 weight %, more preferably at least 70 weight %, even more preferably at least 80 weight % of the hydrocarbons in the wash fluid consists of C₅-C₂₀ hydrocarbons, preferably C₈-C₂₀ hydrocarbons, more preferably C₈-C₁₄ hydrocarbons.

The wash fluid used in step c) preferably is kerosene, more preferably kerosene comprising at least 80 weight % C₆-C₁₆ hydrocarbons, even more preferably kerosene comprising at least 80 weight % C₈-C₁₆ hydrocarbons, still more preferably kerosene comprising at least 80 weight % C₈-C₁₄ hydrocarbons.

Preferably the initial boiling point of the wash fluid is higher than 80 °C, more preferably higher than 100 °C. The higher the initial boiling point of the wash fluid the easier it is to separate C3+ hydrocarbons from the wash fluid.

The wash fluid used in step c) is a product obtained in step i). The wash fluid used in step c) more preferably is kerosene obtained in step i). Preferably only a part of the obtained kerosene is used as wash fluid in step c).

The Fischer-Tropsch off-gas preferably is at a temperature of 0-50 °C, preferably 10-40 °C when it enters the scrubber. Preferably the pressure of the Fischer-Tropsch off-gas is 1-80 bar, preferably 20-70 bar, when it enters the scrubber. Preferably the scrubber is adapted to provide maximum contact between the off-gas and the wash fluid with minimum pressure drop. Preferably the pressure during the contacting step is the same as the off-gas pressure.

In step d) wash fluid and at least a portion of the C₃+ hydrocarbons are removed in a stream from the scrubber of step c). The process of the present invention proofed to be very effective in removing C₃+ hydrocarbons from the off-gas.

After removal of at least a portion of the C3+ hydrocarbons from the off-gas by means of the wash fluid, the remaining off-gas is removed in a separate stream from the scrubber of step c). This is performed in step e). The removal of the remaining off-gas may, for example, be performed when regenerating the scrubber of step c). The stream comprising remaining off-gas may be used for the production of electrical power, in an expanding/combustion process such as in a gas turbine, as burner fuel, or it may be fed to a syngas production process. The energy generated in the process may be used for own use or for export to local customers. Part of the energy could be used for the compression of an oxygen containing gas.

In step f) at least a part of the hydrocarbon product stream obtained in step b) and at least a part of the stream obtained in step d) are fed to a separator. These streams may be fed separately to the same separator. Additionally or alternatively these streams may be combined before being fed to a separator. If desired additional feed streams may be fed to the same separator.

In step g) separation takes place in the separator of step f). The separator comprises at least a part of the hydrocarbon product stream obtained in step b) and at least a part of the stream obtained in step d), and optionally other materials. The separation results in at least one light stream and one heavy stream, whereby said light stream preferably comprises carbon monoxide and carbon dioxide and said heavy stream preferably comprises hydrocarbons with at least 3 carbon atoms.

The light stream obtained in step g) more preferably comprises carbon monoxide, carbon dioxide, methane, and hydrocarbons containing 2 carbon atoms, and optionally oxygenates comprising 2 carbon atoms. The heavy stream obtained in step g) preferably comprises hydrocarbons with at least 3 carbon atoms, more preferably C₃+ hydrocarbons resulting from the hydrocarbon product stream obtained in step b), and C₃+ hydrocarbons resulting from the stream obtained in step d). The heavy stream thus more preferably comprises C₃+ hydrocarbons resulting from the hydrocarbon product stream obtained in step b) and C₃+ hydrocarbons recovered from the off-gas obtained in step b).

The separator(s) used in step g) may be a stripper, for example a light ends stripper, a flasher, and/or a distillation unit, or any other suitable separation unit. Preferably the separator, or one of the separators, used in step g) is a stripper, more preferably a light ends stripper.

The separation(s) in step g) preferably take(s) place at a pressure in the range of from 1 to 20 bar, more preferably 1 to 5 bar, even more preferably at about 1 bar.

In step h) at least a part of the heavy stream obtained in step g) is subjected to hydrocracking and/or hydrocracking/hydroisomerisation. As discussed above, the heavy stream may comprise, for example, C₃+ hydrocarbons, or C₁₈+ hydrocarbons, or C₂₀+ hydrocarbons. Preferably at least a part of the heavy stream obtained in step g) is fed to a reaction zone where it is contacted with hydrogen at a temperature in the range of 175 to 400 °C and a pressure in the range of 20 to 250 bar. Preferably a catalyst is present in the reaction zone. More preferably a catalyst comprising platinum and/or palladium, an amorphous silica/alumina, and optionally zeolite beta, is present in the reaction zone.

Preferably in step h) at least a part of the heavy stream obtained in step g) is subjected to a hydrocracking process to convert hydrocarbons boiling above 315 °C into hydrocarbons boiling below 315 °C. More preferably hydrocarbons boiling above 305 °C are converted into hydrocarbons boiling below 305 °C. Even more preferably hydrocarbons boiling above 250 °C are converted into hydrocarbons boiling below 250 °C. Still more preferably hydrocarbons boiling above 240 °C are converted into hydrocarbons boiling below 240 °C.

During such a hydrocracking process also hydroisomerisation will occur. In the hydrocracking/hydroisomerisation process, hydrocarbon fuels are prepared from the hydrocarbon product of the one or more heavy Fischer-Tropsch fractions by hydrocracking and hydroisomerising the product with hydrogen in the presence of a suitable catalyst. Typically, the catalyst comprises as catalytically active component one or more metals selected from Groups VIB and VIII of the Periodic Table of Elements, in particular one or more metals selected from molybdenum, tungsten, cobalt, nickel, ruthenium, iridium, osmium, platinum and palladium. Preferably, the catalyst comprises one or more metals selected from nickel, platinum and palladium as the catalytically active component. Catalysts comprising platinum as the catalytically active component have been found to be particularly suitable.

Catalysts for the hydrocracking process typically comprise a refractory metal oxide as a carrier. The carrier material may be amorphous or crystalline. Suitable carrier materials include silica, alumina, silica-alumina, zirconia, titania and mixtures thereof. The carrier may comprise one or more zeolites, either alone or in combination with one or more of the aforementioned carrier materials. Preferred carrier materials for inclusion in the catalyst are silica, alumina and silica-alumina. A particularly preferred catalyst comprises platinum supported on an amorphous silica-alumina carrier.

As catalyst for the hydrocracking process a catalyst comprising zeolite beta may be used. In that case the catalyst preferably comprises 0.1-15 wt% of a zeolite beta, calculated on the weight of the catalyst. More preferably the zeolite beta in the catalyst is present in an amount of at least 0.5 wt%, more in particular in an amount of at least 1 wt%, and/or in an amount of at most 10 wt%, more in particular in an amount of at most 8 wt%, even more particular in an amount of at most 4 wt %, calculated on the weight of the catalyst.

The catalyst for the hydrocracking process may comprise 0.005 to 5.0 wt% of a Group VIII noble metal on a carrier, the carrier comprising 0.1-15 wt% of a zeolite beta and at least 40 wt% of an amorphous silica-alumina, calculated on the weight of the catalyst. Preferably such a catalyst comprises 0.005 to 5.0 wt% platinum and/or palladium. Preferably the zeolite beta in such a catalyst is present in an amount of at least 0.5 wt%, more in particular in an amount of at least 1 wt%, and/or in an amount of at most 10 wt%, more in particular in an amount of at most 8 wt%, even more particular in an amount of at most 4 wt %. The zeolite beta in the catalyst preferably has a silica:alumina molar ratio of at least 50, more preferably at least 75 and at most 500, calculated as SiO₂ and Al₂O₃. The amorphous silica-alumina preferably has an alumina content, calculated as Al₂O₃, of 5-70 wt%.

In the hydrocracking/hydroisomerisation process, the hydrocarbons are contacted with hydrogen in the presence of the catalyst at elevated temperature and pressure. The temperature will preferably be in the range of from 175 to 400 °C, more preferably 200 to 400 °C, even more preferably from 275 to 375 °C. The pressure will preferably be in the range of from 20 to 250 bars, more preferably from 40 to 200 bars, even more preferably from 40 to 100 bars. Hydrogen preferably is supplied at a gas hourly space velocity of from 100 to 10000 Nl/1/hr, more preferably from 500 to 5000 Nl/1/hr. The hydrocarbon feed preferably is provided at a weight hourly space velocity of from 0.1 to 5 kg/1/hr, more preferably from 0.25 to 2 kg/1/hr. The ratio of hydrogen to hydrocarbon feed preferably is from 100 to 5000 Nl/kg, more preferably from 250 to 2500 Nl/kg.

The degree of hydrocracking occurring in the hydrocracking/hydroisomerisation step may be measured by determining the degree of conversion of the fraction boiling above 370 °C. Typically, the hydrocracking/hydroisomerisation stage is operated at a conversion of at least 40%.

In step i) at least a part of the hydrocracked and/or hydrocracked/hydroisomerised product obtained in step h) is separated into at least two streams. This may be performed in a separation unit. The hydrocarbon fuel produced in the hydrocracking process of step h) will typically comprise hydrocarbons having boiling points lying in a number of different fuel fractions, for example naphtha, kerosene and gasoil fractions. Separation of the hydrocarbon fuel into the appropriate fractions may be conveniently achieved using distillation techniques well known in the art.

The separator(s) used in step i) may be a stripper, for example a light ends stripper, a flasher, and/or a distillation unit, or any other suitable separation unit. Preferably the separator, or one of the separators, used in step i) is a stripper, more preferably a light ends stripper. The separation unit used in step i) preferably is a distillation unit, for example a synthetic crude distiller.

One of the streams obtained in step i) is a stream which is useful as wash fluid in step c). Preferably one of the streams obtained is kerosene, more preferably kerosene comprising at least 80 weight % C₆-C₁₆ hydrocarbons, even more preferably kerosene comprising at least 80 weight % C₈-C₁₆ hydrocarbons, still more preferably kerosene comprising at least 80 weight % C₈-C₁₄ hydrocarbons. As stated in step j), at least a part of this stream is used as wash fluid in step c).

Figure 1 illustrates an overview of an example for a line-up in which the method of the present invention may be performed. Fischer-Tropsch synthesis takes place in reactor (10). Fischer-Tropsch off-gas (1) and a hydrocarbon product stream (2) are separated from the reactor (10). The off-gas (1) is fed to a scrubber (20). The off-gas (1) comprises hydrogen, carbon monoxide, carbon dioxide, nitrogen, and C3+ hydrocarbons. The hydrocarbon stream (2) is fed to a separation unit (30). Wash fluid and at least a portion of the C₃+ hydrocarbons of the off-gas are removed in a stream (15) from the scrubber (20) to the separation unit (30). Remaining off-gas is removed in a stream (21) from the scrubber (20). A heavy stream (3) and a light stream (31) are removed from the separator (30). The heavy stream (3) is fed to a hydrocracking/hydroisomerisation unit (40). A hydrogen comprising stream (41) is fed to unit (40). At least a part of the hydrocracked/hydroisomerised product (4) is separated into at least two streams in separation unit (50). At least a part of stream (16) is used as wash fluid in scrubber (20).

## Claims

1. A method for processing a Fischer-Tropsch off-gas comprising the following steps:
a) catalytic conversion of synthesis gas using a Fischer-Tropsch catalyst into a Fischer-Tropsch product;
b) separating the Fischer-Tropsch product of step a) into at least one hydrocarbon product stream and a Fischer-Tropsch off-gas, said Fischer-Tropsch off-gas comprising hydrogen, carbon monoxide, carbon dioxide, nitrogen, and C3+ hydrocarbons;
c) contacting at least a part of the Fischer-Tropsch off-gas obtained in step b), optionally after cooling, with a wash fluid in a scrubber;
d) removing wash fluid and at least a portion of the C₃+ hydrocarbons of the off-gas in a stream from the scrubber of step c);
e) removing the remaining off-gas in a separate stream from the scrubber of step c);
f) providing a feed comprising at least a part of the hydrocarbon product stream obtained in step b) and a feed comprising at least a part of the stream obtained in step d) to a separator,
or providing a feed comprising at least a part of the hydrocarbon product stream obtained in step b) and at least a part of the stream obtained in step d) to a separator;
g) separating at least a part of the hydrocarbon product stream obtained in step b) and at least a part of the stream obtained in step d) in the separator of step f) into at least one light stream and one heavy stream, said light stream preferably comprising carbon monoxide and carbon dioxide and said heavy stream preferably comprising hydrocarbons with at least 3 carbon atoms;
h) subjecting at least a part of the heavy stream obtained in step g) to hydrocracking and/or hydrocracking/hydroisomerisation;
i) separating at least a part of the hydrocracked and/or hydrocracked/hydroisomerised product obtained in step h) into at least two streams;
j) using at least a part of one of the streams obtained in step i) as wash fluid in step c).

2. A method according to claim 1, wherein the wash fluid used in step c) comprises hydrocarbons and at least 60 weight %, more preferably at least 70 weight %, even more preferably at least 80 weight % of the hydrocarbons in the wash fluid consists of C₅-C₂₀ hydrocarbons, preferably C₈-C₂₀ hydrocarbons, more preferably C₈-C₁₄ hydrocarbons.

3. A method according to claim 1 or 2, wherein the stream that is obtained in step i) and that is used as wash fluid in step c) is kerosene, more preferably kerosene comprising at least 80 weight % C₆-C₁₆ hydrocarbons, even more preferably kerosene comprising at least 80 weight % C₈-C₁₆ hydrocarbons, still more preferably kerosene comprising at least 80 weight 80 weight % C₈-C₁₄ hydrocarbons.
